Europäisches Patentamt

(19) European Patent Office

Office européen des brevets

(11) Publication number: **0 037 919**

**B1**

(12) **EUROPEAN PATENT SPECIFICATION**

(45) Date of publication of patent specification: **09.01.85**

(21) Application number: **81102085.8**

(22) Date of filing: **20.03.81**

(51) Int. Cl.⁴: **F 16 D 65/12,** F 16 D 55/40

(54) **Improvements in multi-disc brakes.**

(30) Priority: **10.04.80 GB 8011917**

(43) Date of publication of application:
**21.10.81 Bulletin 81/42**

(45) Publication of the grant of the patent:
**09.01.85 Bulletin 85/02**

(84) Designated Contracting States:
**DE FR GB IT NL SE**

(56) References cited:
**DE-A-2 526 403**
**GB-A- 579 172**
**GB-A-1 141 298**
**GB-A-1 249 692**
**GB-A-1 382 493**
**GB-A-2 031 540**
**US-A-3 398 822**
**US-A-3 525 421**

(73) Proprietor: **DUNLOP LIMITED**
**Dunlop House Ryder Street St. James's**
**London SW1Y 6PX (GB)**

(72) Inventor: **Cole, John Francis**
**30 Dunster Place**
**Holbrooks Coventry (GB)**

(74) Representative: **Waller, Roy Ernest Sykes et al**
**Group Patent Department Dunlop Limited 2**
**Parade**
**Sutton Coldfield West Midlands B72 1PF (GB)**

Courier Press, Leamington Spa, England.

## Description

The present invention relates to an improved multi-disc brake, as set forth in the first part of claim 1, by which is meant a brake of the kind comprising interleaved, annular rotor and stator discs which are axially displaceable into frictional engagement to apply the brake, the or each rotor disc being non-rotatable with respect to the wheel being braked and the or each stator disc being non-rotatable with respect to the wheel axle so that when an axial, compressive force is exerted on the disc pack friction between a rotor disc rotating with the wheel and a stator disc held stationary relative to the axle will tend to arrest the wheel.

Multi-disc brakes have been in use for some years on aircraft, exploiting their high braking efficiency and thermal absorption capacity. GB—A—579.172 which relates to this type of multi-disc aircraft brake in which the discs are circumferentially continuous since their segments are interconnected, discloses the features of the prior art portion of claim 1. Replacement of worn brake discs can only be effected in this prior art brake by completely dismantling the disc pack so as to withdraw the discs in the axial direction.

In such multi-disc aircraft brakes steel rotor and stator discs have been faced with linings or pads of friction materials capable of withstanding the high temperatures generated and to withstand exceptionally severe thermal conditions rotors and stators have consisted wholly of all carbon composite materials.

The rotor discs of a multi-disc brake have had notched outer peripheries engaging dogs or splines on the inner periphery of the wheel and stators have had notched inner peripheries engaging dogs or splines of a torque tube stationary with respect to the axle. The hydraulic or pneumatic means for applying compressive thrust to the disc pack has been located at one end of the pack and a reaction member to receive the thrust has been located at the other end of the pack integral with the torque tube. It will be apparent that in such an arrangement the only way to gain access to a particular rotor or stator disc to inspect, service or replace it has been to slide the discs axially off one end of the dogs on the torque tube. The reaction member has been removed to permit removal of the discs from the outboard side of the wheel. Removal of the wheel may expose the outer peripheries of the discs of the pack but will not allow them to be removed in the radial direction because each disc is an annulus surrounding the torque tube.

A principal object of the present invention is to provide a multi-disc brake in which the complexity of, and the time and labour consumed in, maintenance and inspection operations are greatly reduced in that the pack of interleaved discs need not be disassembled in the axial direction. In an aircraft wheel it is desirable to avoid this need to remove the reaction member. In a commercial vehicle wheel it is even more desirable to avoid this need because as a preliminary the hub assembly would have to be removed. By achieving this object the invention will provide a brake more versatile in its application since one of the factors which inhibits application of multi-disc brakes to road or rail vehicles, for example, is the high maintenance costs which are acceptable in the case of aircraft because of the overriding advantages of a multi-disc brake for aircraft.

The object mentioned above is achieved by means of a multi-disc brake having the features stated in the characterising part of claim 1 below. Suitable embodiments are disclosed in the subclaims. According to the present invention there is provided a multi-disc brake comprising a plurality of rotor discs drivably engaged by a rotatable member in the form of a rotatable drum and interleaved with a plurality of coaxial stator members engaged with a non-rotatable member, the rotor and stator discs being axially displaceable, and a brake-applying mechanism for effecting relative axial displacement of the rotor and stator discs to bring the rotor and stator discs into frictional engagement with one another, wherein each rotor disc comprises a plurality of discrete circumferentially separated portions and releasable fastening means being provided to maintain said portions in position relative to the rotatable member, said portions being radially removable from the rotatable member on release of the associated fastening means.

Radial pad removal has been in common use for static friction pads (e.g. DE—A—2.526.403). The step of making the rotor discs from a plurality of separate segments which are detachably secured in their radially outer regions to a rotatable drum so that the segments can be removed through apertures of the drum in a radial direction has never before been put forward. The brakes described in US—A—3.525.421 incorporate segmental rotor discs interconnected in a manner which preclude removal of the segments in the radial direction. According to the subclaims preferably the removable portions of the respective rotors are each axially aligned with a removable portion of an adjacent rotor and a releasable fastening means is arranged to engage axially aligned removable portions of at least two rotors to permit radial withdrawal of said axially aligned portions of the respective rotors when the associated fastening means is released.

A fastening means preferably comprises at least one pin arranged to pass through respective apertures in each associated rotor portion and through respective apertures in the rotatable member, and means to secure the pin to the rotatable member.

The fastening means preferably comprise two pins for each set of associated axially-aligned rotor portions.

The drum preferably has circumferentially spaced axially elongated slots through each of which a set of axially-aligned rotor portions may be withdrawn upon release of the associated fastening means. The drum is preferably formed with ring-like ends and the drum slot are preferably each bridged by a pair of circumferentially spaced axially-aligned pins passing through aligned apertures in the ring-like ends, releasable securing means being provided for the pins so that upon release thereof the pins may be extracted axially to free the associated rotor portions for radial withdrawal of said portions through said slots.

A preferred embodiment of the present invention will now be described with reference to the accompanying diagrammatic drawings, in which:—

Figure 1 is a side sectional elevation taken in a radial plane through a wheel and brake assembly in accordance with the invention, and

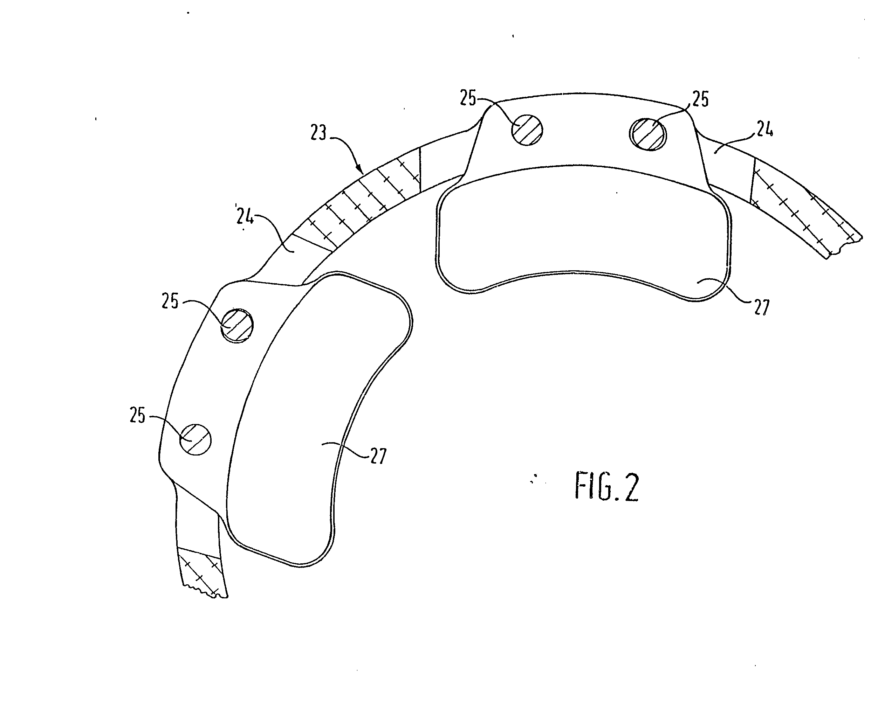

Figure 2 is a partial cross-sectional elevation taken on the line II—II of Figure 1.

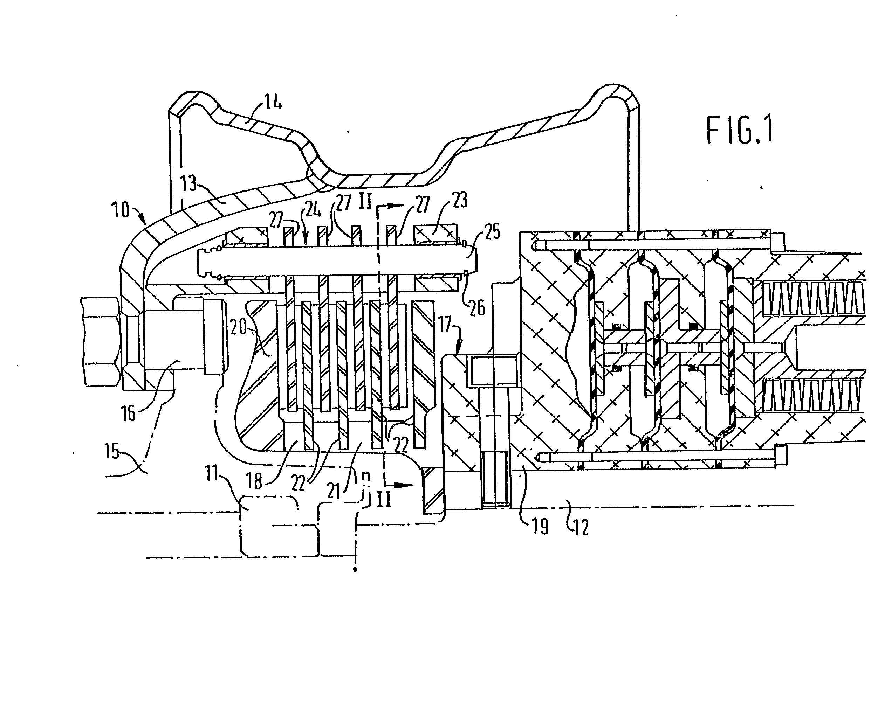

The assembly illustrated comprises a wheel 10 rotatably mounted by bearings 11 on an axle 12. The disc 13 and rim 14 portions of the wheel 10 are removable, together with a pneumatic tyre (not shown) mounted on the rim 14, from a hub portion 15 by releasing wheel nuts (not shown) from studs, one of which is indicated at 16 in Figure 1.

Within the annular cavity on the inboard side of the wheel 10 is mounted a multi-disc brake assembly 17 which comprises a torque tube 18 stationary with respect to the axle 12 having at its outboard end a reaction flange 20 and at its inboard end a suitable hydraulic, or mechanical thrust applying means 19 which may be of any known kind and which in the example illustrated is of the kind described in U.K. Patent Specification No. 2,031,540 (CA 5901).

The torque tube 18 has a series of circumferentially spaced, axially extending dogs or splines 21 on which are located notches in the inner peripheries of steel stator discs 22 such that the annular stator discs 22 are incapable of rotation relative to the torque tube 18 but are axially slidable relative thereto under the influence of the thrust applying means 19 moving toward the reaction member 20.

As so far described the illustrated assembly is conventional. In accordance with the present invention, however, a drum 23 surrounds and is rotatable with the wheel hub 15, the drum having circumferentially spaced, axially elongated slots 24. Each of these slots 24 is bridged in the axial direction by a pair of circumferentially spaced pins 25 passing through aligned apertures in the ring-like ends of the drum 23 and releasably retained therein against axial displacement by respective circlips 26.

The slots 24 are five in number and the two pins 25 in each slot pass through respective apertures in each of four pads or rotor portions 27 such that in the completed assembly there are five pads 27 in each of four planes perpendicular to the axis of the disc pack. The five circumferentially separated pads 27 located in the same plane jointly constitute one of four rotor discs interleaved with the stator discs 22 and rotatable with the wheel 10 because of their retention on the drum 23 by the pins 25.

It will be apparent that the five pads 27 jointly constituting one rotor disc are capable of limited relative axial displacement when the thrust applying means 19 is out of engagement with the nearest stator disc 22 in the "brakeoff" position illustrated but when the disc pack is compressed against the reaction member 20 by the thrust-applying means 19 all five pads 27 constituting a rotor disc will lie in the same plane through compression between adjacent stator discs 22 (or the reaction member 20 and the nearest stator disc 22).

To remove the rotor pads 27 from the disc pack it is necessary only to remove the wheel 10 from the hub 15 by releasing the wheel nuts engaged with studs 16, after which the circlips 26 may be removed to allow the pins 25 to be withdrawn from the drum 23 to the left as viewed in Figure 1. When the two pins 25 supporting an axially aligned group of four rotor pads 27 have been removed those rotor pads may be withdrawn from the disc pack radially outwardly with respect to the wheel axis. Obviously only the two pins 25 associated with one slot 24 in the drum 23 need to be removed at a time so that only one of the pads 27 of each rotor assembly is removable at a time, the four remaining pads 27 of each rotor maintaining an axial spacing between the adjacent stator disc 22 into which the removed pads 27, or fresh pads, can be inserted.

It will be observed that while the stator discs 22 are plain steel the pads 27 each have a steel plate faced on opposite sides by linings of a friction material other than steel, such as a sintered material, which in use will be subject to greater wear than the all-steel stator discs. Therefore the elements of the assembly which will require the most frequent replacement, namely the rotor pads 27, are those which are most accessible for replacement without the necessity to slide the discs axially off the dogs 21 of the torque tube. Furthermore, in a brake of the type having a drum it is unnecessary to remove the drum in order to replace the pads.

The invention has been described as applied to a wheel 10 adapted for the mounting of a pneumatic tyre and therefore suitable either for an aircraft or a road vehicle but it will be appreciated that it is also applicable to other wheels, such as those of railway rolling stock.

**Claims**

1. A multi-disc brake comprising a plurality of rotor discs (27) non-rotatable but axially displaceable relative to a member (23) rotatable with a wheel (10), the rotor discs (27) being interleaved with a plurality of stator discs (22) non-rotatable but axially displaceable relative to a member (18) stationary with respect to the wheel axle (12), the brake being applied by axially displacing the discs (27, 22) relative to the associated members (23, 18) into frictional engagement, characterised in that each rotor disc is drivably attached at its outer periphery to a member (23) in the form of a rotatable drum and comprises a plurality of discrete, circumferentially separated portions (27), axially aligned portions of the respective rotor disc portions (27) being maintained in position in the disc pack by respective fastening means (25) releasably engaging the associated drum (23) to drivably secure the rotor disc portions (27) to the drum (23), the drum (23) having one or more openings (24) to permit radial withdrawal therefrom and from the disc pack of axially aligned rotor portions (27) when the associated fastening means (25) is released.

2. A brake as claimed in Claim 1 wherein the releasable fastening means associated with each set of axially aligned rotor portions (27) comprises two or more pins (25) passing through respective apertures in each associated rotor portion (27) and through respective apertures in annular end formations of said member (23) associated with the rotor discs (27).

3. A brake as claimed in Claim 1 or Claim 2 wherein the drum (23) has circumferentially spaced, axially elongated slots (24) through which a respective set of axially-aligned rotor portions (27) may be removed when the associated fastening means (25) is released.

**Revendications**

1. Un frein multidisque comprenant une pluralité de disques de rotor. (27) non rotatifs mais mobiles en déplacement axial par rapport à un élément (23) qui tourne avec une roue (10), les disques de rotor (27) étant intercalés avec une pluralité de disques de stator (22) qui sont non rotatifs mais mobiles en déplacement axial par rapport à un élément (18) fixe par rapport à l'essieu (12) de la roue, le frein étant serré par déplacement axial des disques (27, 22) par rapport aux éléments (23, 18) qui leur sont associés, pour les mettre en prise par frottement, caractérisé en ce que chaque disque de rotor est fixé, avec liaison d'entraînement, au niveau de sa périphérie extérieure, à un élément (23) présenté sous la forme d'un tambour rotatif et comprend une pluralité de parties discrètes (27), espacées circonférentiellement, les parties axialement alignées des parties disques de rotor (27) respectives étant maintenues en position dans le paquet de disques par des moyens de fixation respectifs (25) qui coopérant avec le tambour correspondant (23) d'une façon qui permet de les dégager, pour fixer les parties des disques de rotor (27) au tambrou (23), le tambour (23) ayant une ou plusieurs ouverture(s) (24) pour permettre d'en extraire radialement, ainsi que du paquet de disques, des parties de rotor (27) alignées axialement lorsque les moyens de fixation (25) correspondants sont dégagés.

2. Un frein comme revendiqué dans la revendication 1, dans lequel les moyens de fixation pouvant être dégagés associés à chaque jeu de parties de rotor (27) alignées axialement comprennent deux ou plus de deux broches (25) qui passent à travers des ouvertures respectives de chaque partie de rotor (27) qui leur est associée et à travers des ouvertures respectives ménagées dans des formations d'extrémités annulaires dudit élément (23) qui sont associées aux disques de rotor (27).

3. Un frein comme revendiqué dans la revendication 1 ou la revendication 2, dans lequel le tambour (23) présente des fentes (24) allongées axialement, espacées circonférentiellement, à travers lesquelles un jeu correspondant de parties de rotor (27) alignées axialement peuvent être extraites lorsque les moyens de fixation correspondants (25) sont dégagés.

**Patentansprüche**

1. Mehrscheibenbremse mit einer Mehrzahl von Rotorscheiben (27), die nicht drehbar, jedoch relativ zu einem mit einem Rad (10) drehbaren Teil (23) axial verschiebbar und zwischen einer Mehrzahl von Statorscheiben (22) angeordnet sind, die nicht drehbar, jedoch relativ zu einem mit Bezug auf die Radachse (12) stillstehenden Teil (18) axial verschiebbar sind, wobei die Bremse dadurch angelegt wird, daß die Scheiben (27, 22) relativ zu den zugeordneten Teilen (23, 18) in Reibungseingriff axial verschoben werden, dadurch gekennzeichnet, daß jede Rotorscheibe an ihrem Außenumfang an einem Teil (23) in Form einer drehbaren Trommel antreibbar angebracht ist und eine Mehrzahl von einzelnen in Umfangsrichtung voneinander getrennten Teilen (27) aufweist, axial ausgerichtete Teile der betreffenden Rotorscheibenteile (27) in ihrer Lage in dem Scheibenstapel durch betreffende Befestigungseinrichtungen (25) gehalten sind, welche mit der zugeordneten Trommel (23) freigebbar in Eingriff treten, um die Rotorscheibenteile (27) antriebbar an der Trommel (23) zu befestigen, und daß die Trommel (23) eine oder mehrere Öffnungen (24) aufweist, um radiales Zurückziehen von diesen und von dem Scheibenstapel von axial ausgerichteten Rotorteilen (27) zu ermöglichen, wenn die zugeordnete Befestigungseinrichtung (25) freigegeben bzw. gelöst ist.

2. Bremse nach Anspruch 1, dadurch gekennzeichnet, daß die jedem Satz von axial ausgerichteten Rotorteilen (27) zugeordnete Befestigungseinrichtung zwei oder mehr Bolzen (25) aufweist, die durch betreffende Öffnungen in jeden zugeordneten Rotorteil (27) und durch betreffende Öffnungen in ringförmigen Endausbildungen des den Rotorscheiben (27) zugeordneten Teiles (23) hindurchgehen.

3. Bremse nach Anspruch 1 oder 2, dadurch gekennzeichnet, daß die Trommel (23) auf dem Umfang um Abstand voneinander liegende axial längliche Schlitze (24) aufweist, durch welche hindurch ein betreffender Satz von axial ausgerichteten Rotorteilen (27) entfernt werden kann, wenn die zugeordnete Befestigungseinrichtung (25) freigegeben bzw. gelöst ist.

FIG.1

FIG.2

0037 919